# EUROPÄISCHE PATENTANMELDUNG

(11) **EP 0 570 745 A1**
(43) Veröffentlichungstag der Anmeldung: **24.11.1993**
(21) Anmeldenummer: 93107107.0
(22) Anmeldetag: 01.05.1993
(51) Int. Cl.: B01D 17/02, C02F 1/40

(54) **Vorrichtung zum Trennen von öl und Wasser**

(30) Priorität: 22.05.1992 DE 4216961
(71) Anmelder: Koch, Berthold, D-41468 Neuss (DE)
(72) Erfinder: Koch, Berthold, D-41468 Neuss (DE)
(74) Vertreter: Türk, Gille, Hrabal, Leifert

(57) **Zusammenfassung**

Es ist eine Vorrichtung zum Trennen von Öl und Wasser offenbart, die ein kastenartiges Gehäuse (1) aufweist, das einzelne, labyrinthartig untereinander in Reihe verbundene Kammern (3,21) zur Schmutzsedimentation, Schmutzadsorption, Schmutzfiltration und zum Aufschwimmen von Öl enthält. Dabei ist das Gehäuse (1) mit in und an ihm angeordneten Kammern und Einbauten (19,32,33,35) weitgehend nahtlos einstückig aus Kunststoff hergestellt und zwar vorzugsweise im Rotationssinterverfahren. Auch separat eingebaute Kammern, beispielsweise für die Filtration, können nahtlos einstückig aus Polyethylen im Rotationssinterverfahren hergestellt sein.

## Beschreibung

Die Erfindung betrifft eine Vorrichtung zum Trennen von Öl und Wasser, beispielsweise zum Zerlegen von aus Druckluft- und Druckgassystemen abgeschiedenem Kondensat in seine Bestandteile, nämlich Öl und Wasser, wobei diese Vorrichtung ein kastenartiges Gehäuse aufweist, das einzelne, in Reihe labyrinthartig untereinander verbundene Kammern zur Schmutzsedimentation, Schmutzadsorption und zum Aufschwimmen von Öl enthält.

Eine bekannte Öl-Wasser-Trennvorrichtung dieser Gattung (DE 35 31 016 C2) weist ein Gehäuse auf, dessen verschiedene Wände, Kammern, Ein- und Aufbauten aus einzelnen Rohren und Platten aus Polypropylen zusammengesetzt sind. Diese Bauteile müssen an den Naht- oder Stoßstellen untereinander verschweißt oder verklebt werden, so daß die Herstellung kompliziert und aufwendig ist und außerdem die Gefahr besteht, daß die einzelnen Nähte nicht absolut dicht sind. Hinzu kommt, daß Gehäuse dieser Art wegen der Plattenbauweise verhältnismäßig sperrig sind und keine formschöne Gestalt haben.

Der Erfindung liegt die Aufgabe zugrunde, eine Vorrichtung der eingangs genannten Gattung derart zu verbessern, daß deren Gehäuse mit den Einbauten und Anbauten einfacher und zuverlässiger hergestellt werden kann, ohne die Funktionsweise dieser Öl-Wasser-Trennvorrichtung zu beeinträchtigen.

Diese Aufgabe wird erfindungsgemäß mit einer Vorrichtung gelöst, welche die Merkmale des Patentanspruches 1 aufweist. Vorteilhafte Ausgestaltungen der Erfindung sind Gegenstand der Unteransprüche.

Bei der erfindungsgemäßen Vorrichtung kann das gesamte Gehäuse mit allen seinen Ein- und Anbauten oder wenigstens einem Teil derselben einstückig im Sinterrotationsverfahren, vorzugsweise aus Polyethylen` nahtlos hergestellt werden. Nur die Teile, welche von Zeit zu Zeit ausgebaut oder abgebaut werden müssen, beispielsweise Schmutzfänger oder Deckel des Gehäuses, können separat, aber vorzugsweise ebenfalls im Sinterrotationsverfahren angefertigt werden. Dadurch ergibt sich eine formschöne Gestalt des Gehäuses, und es lassen sich tote Ecken innerhalb des Gehäuses bzw. der Einbauten desselben wirksam vermeiden.

Die Vorrichtung kann automatisch arbeiten, wobei sowohl auf Handarbeit als auch auf zeitgesteuerte Magnetventile verzichtet werden kann. Dabei läßt sich der für das abgeschiedene Öl vorgesehene Überlauf in seiner Höhe verstellen, um eine Niveauregelung im Bereich des abzuscheidenden Öls vornehmen zu können.

In der Zeichnung sind Ausführungsbeispiele einer erfindungsgemäßen Vorrichtung zum Trennen von Öl und Wasser schematisch dargestellt, und zwar zeigt
- Fig. 1: eine erste Ausführungsform der Vorrichtung in einem senkrechten Schnitt,
- Fig. 2: eine zweite Ausführungsform der Vorrichtung, ebenfalls in einem senkrechtem Schnitt,
- Fig. 3: eine Einzelheit, nämlich einen kombinierten Niederhalter und Niveaumelder, in gegenüber Fig. 1 und 2 vergrößertem Maßstab,
- Fig. 4: eine gegenüber Fig. 1 und 2 abgewandelte Druckentlastungskammer.

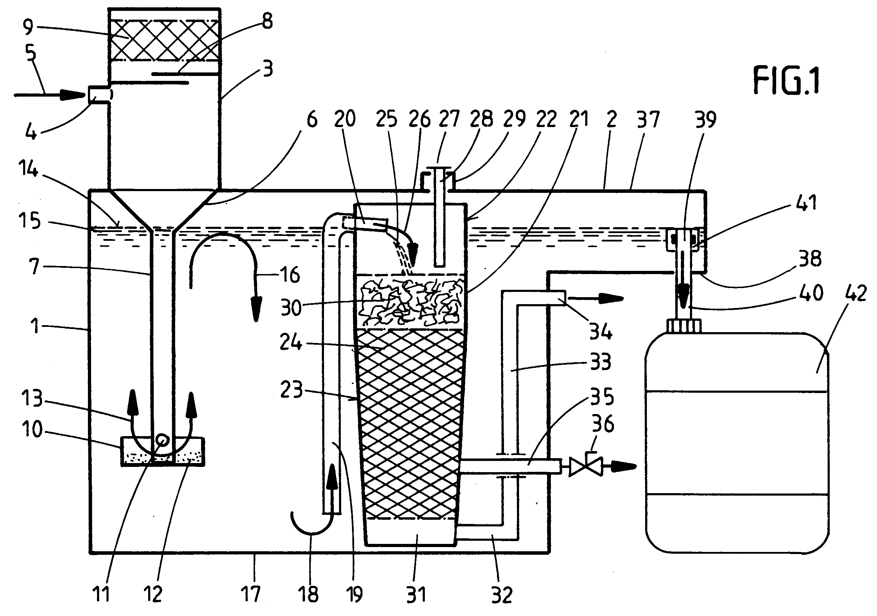

Die in Fig. 1 gezeigte Vorrichtung hat ein kastenartiges Gehäuse 1, dessen Oberseite 2 einen oder mehrere nicht dargestellte Deckel enthält oder insgesamt aus einem abnehmbaren Deckel bestehen kann.

Auf das kastenartige Gehäuse 1 ist eine als Trichter ausgebildete Druckentlastungskammer 3 aufgesetzt, in die durch einen tangential angebrachten Stutzen 4 unter Druck stehendes Kondensat stoßweise oder auch fortlaufend eingeleitet werden kann, wie durch einen Pfeil 5 angedeutet ist.

Die Druckentlastungskammer 3 hat einen in das Gehäuse 1 hineinragenden, sich konisch bzw. trichterförmig verjüngenden Abschnitt 6, der in ein Fallrohr 7 mündet, das bis in den unteren Bereich des kastenförmigen Gehäuses ragt.

Oberhalb des als Kondensateintritt dienenden Stutzens 4 ist in der Druckentlastungskammer 3 eine Schikane 8 angeordnet, durch die der Druck des zugeführten Kondensats abgebaut werden kann. Oberhalb dieser Schikane 8 ist ein Filter 9 eingebaut, das eventuell von der nach oben entweichenden Druckluft mitgerissenes Kondensat oder sonstige Verunreinigungen zurückhält.

Am unteren Ende des Fallrohrs 7 ist ein schalenförmig ausgebildeter Schmutzfänger 10 angeordnet, in den das in das Fallrohr 7 gelangte Kondensat durch radiale Öffnungen 11 fließt, um dort vom Kondensat mitgeführten Schmutz 12 abzulagern. Das Kondensat steigt dann gemäß Pfeilen 13 im Gehäuse 1 nach oben, wobei im Kondensat mitgeführtes Öl zum Flüssigkeitsspiegel 14 aufschwimmt und dort eine verhältnismäßig dünne Ölschicht 15 bildet.

Der Schmutzfänger 10 kann aus dem kastenartigen Gehäuse 1 bei Bedarf entnommen und dann entleert werden.

Das schon weitgehend von den aufgeschwommenen Öltröpfchen befreite Wasser des Kondensats wird gemäß einem weiteren Pfeil 16 in Richtung zum Boden 17 des Gehäuses 1 umgelenkt und tritt dort, wie durch einen weiteren Pfeil 18 angedeutet, von unten in ein Steigrohr 19 ein. Das Kondensat verläßt das Steigrohr 19 an dessen oberen Ende durch ein dort angeordnetes Überlaufrohr 20. Dieses Überlauffrohr ragt in eine rotationssymetrische Kammer 21, deren Seitenwand 22 nach oben über den Flüssigkeitsspiegel 14 übersteht, so daß das im Gehäuse 1 befindliche Wasser und auch das dort aufgeschwommene Öl nicht über den oberen Rand in die Kammer 21 fließen kann.

In der rotationssymetrischen Kammer 21, deren unterer Bereich 23 sich nach unten konisch verjüngt, befindet sich ein Aktivkohle-Adsorber 24, welcher beispielsweise in einem Sack eine Füllung aus granulatförmiger Aktivkohle enthält, so daß der Aktivkohle-Adsorber 24 bei Bedarf insgesamt ausgewechselt werden kann.

Das Überlaufrohr 20 ist so angeordnet und ragt so weit radial in die Kammer 21 hinein, daß der aus ihm auslaufende Flüssigkeitsstrahl 25 etwa zentral auf die Oberseite des Aktivkohle-Adsorbers 24 auftrifft` wie auch durch einen Pfeil 26 angedeutet ist.

Von oben ragt in die Kammer 21 ein Niveaumelder 27 hinein, der einen schwimmfähigen Stab 28 aufweist, welcher senkrecht verschiebbar in einer an der Oberseite 2 des Gehäuses 1 befindlichen Fassung 29 qelagert ist. Wenn über eine in der Kammer 21 über der Aktivkohle im Aktivkohle-Adsorber 24 befindliches olephiles Vorfilter 30 Flüssigkeit ansteigt, was ein Zeichen dafür ist, daß der Aktivkohle-Adsorber 24 nicht mehr zuverlässig und befriedigend arbeitet, steigt der schwimmfähige Stab 28 nach oben und ragt dadurch über die Fassung 29 hinaus. Die Strecke, um welche der Stab 28 aus der Fassung 29 nach oben herausragt, ist ein Anzeichen für den Verschmutzungsgrad des Aktivkohle-Adsorbers 24. Die Anzeigewirkung des Stabes 28 kann noch dadurch verbessert werden, daß dieser eine Signalfarbe aufweist, beispielsweise eine rote Oberfläche hat.

Das olephile Vorfilter 30 ist - in Strömungsrichtung des Wassers gesehen - vor der Aktivkohle des Aktivkohle-Adsorbers 24 angeordnet und hat den Zweck, in dem zuströmenden Wasser emulgierte feine Restmengen von Öl zu adsorbieren und zu absorbieren. Das Vorfilter 30 besteht zu diesem Zweck vorzugsweise aus Fasermaterial mit verhältnismäßig großer Oberfläche und hat ein hohes Adsorptionsvermögen für Öl, das an der Oberfläche der Fasern aufgrund eines Koaleszenzeffektes zu größeren Öltröpfchen koalesziert und sie dann von den Fasern aufgesaugt wird. Aus Polypropylen bestehendes Fasermaterial hat sich für das olephile Vorfilter 30 als besonders vorteilhaft erwiesen.

Wegen der Anordnung des Vorfilters 30 vor der Aktivkohle des Aktivkohle-Adsorbers, erreicht man, daß im zuströmenden Wasser noch befindliche Restmengen fein emulgierten Öles die Aktivkohle nicht erreichen und somit nicht verschmieren können. Bei bekannten Aktivkohle-Adsorbern sind die Standzeiten bzw. Gebrauchszeiten der Aktivkohle wegen des Verschmierens mit Ölresten beeinträchtigt.

An das untere Ende 31 der Kammer 21 ist eine Auslaßleitung 32 für Flüssigkeit, welche durch den Aktivkohle-Adsorber 24 nach unten hindurchgetreten ist, angebracht. Diese Auslaßleitung 32 mündet in ein Steigrohr 33, das zu einem ständig offenen Wasserauslaß 34 führt. Dieser Wasserauslaß 34 kann in eine Abwasserleitung oder in eine weitere Wasseraufbereitungsvorrichtung münden.

An den unteren Bereich 23 der Kammer 21 ist im Bereich der Aktivkohle-Füllung ein Zapfrohr 35 mit beispielsweise von Hand zu betätigendem Ventil 36 zur Probeentnahme angeschlossen, um den Verschmutzungsgrad der Aktivkohle zu überwachen.

Das Gehäuse 1 ist im oberen Bereich mit einem seitlich vorstehenden Ansatz 37 versehen, dessen Boden 38 tiefer als der im Gehäuse 1 befindliche Flüssigkeitsspiegel 14 und die aufgeschwommene Ölschicht 15 liegt. In diesem Ansatz 37 ist ein als Ölüberlauf 39 dienendes Fallrohr 40 in einer feststehenden Fassung 41 axial verschiebbar angeordnet. Durch eine höhenmäßige Verstellung des oberen Endes des Fallrohres 40 läßt sich das Flüssigkeitsniveau innerhalb des kastenartigen Gehäuses 1 regulieren.

Das Fallrohr 40 mündet in ein Behältnis 42, das zum Auffangen und Sammeln des abgeschiedenen Öls dient. Dieses Behältnis 42 ist zweckmäßig zumindest opak oder auch durchsichtig ausgebildet, um visuell feststellen zu können, wieviel abgeschiedenes Öl sich in diesem Behältnis angesammelt hat.

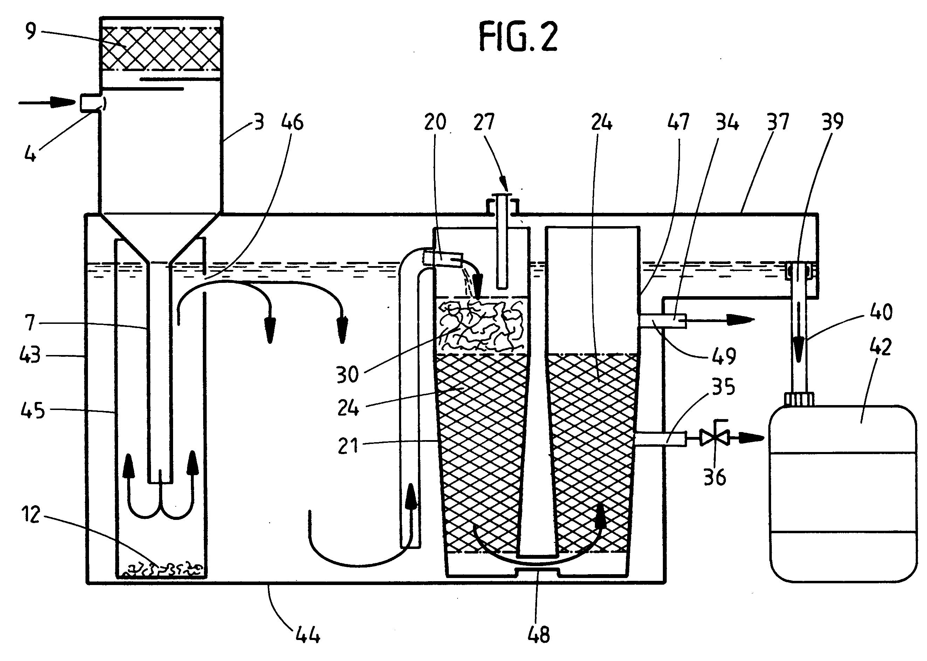

Die in Fig. 2 gezeigte Vorrichtung unterscheidet sich von der aus Fig. 1 im wesentlichen dadurch, daß im kastenartigen Gehäuse 43 ein auf den Boden 44 desselben lose aufsetzbarer rohrförmiger Schmutzfänger 45 angeordnet ist, in den das Fallrohr 7 des Trichters nur teilweise hineinragt und der nahe dem oberen Ende wenigstens eine radiale Öffnung 46 enthält, durch das die Flüssigkeit aus dem Schmutzfänger 45 ausströmen kann. Zum Entleeren kann der Schmutzfänger 45 aus dem Gehäuse 43 entnommen werden.

Außerdem enthält das kastenartige Gehäuse 43 neben der rotationssymetrischen Kammer 21 eine zweite rotationssymetrische Kammer 47 gleicher Konfiguration, die mit der ersten Kammer 21 über ein untenliegendes Verbindungsrohr 48 verbunden ist und an die das Zapfrohr 35 mit dem von Hand zu betätigenden Ventil 36 angeschlossen ist. Oberhalb des in dieser Kammer 47 auswechselbar angeordneten Aktivkohle-Adsorbers 24 mündet ein radialer Stutzen 49, der den permanent offenen Wasserauslaß 34 bildet.

Die übrigen Teile dieser Vorrichtung entsprechen in ihrer Ausbildung und Funktion denen gemäß Fig. 1, so daß hierfür gleiche Positionsziffern verwendet werden und zur Vermeidung von Wiederholungen auf eine erneute Beschreibung verzichtet wird.

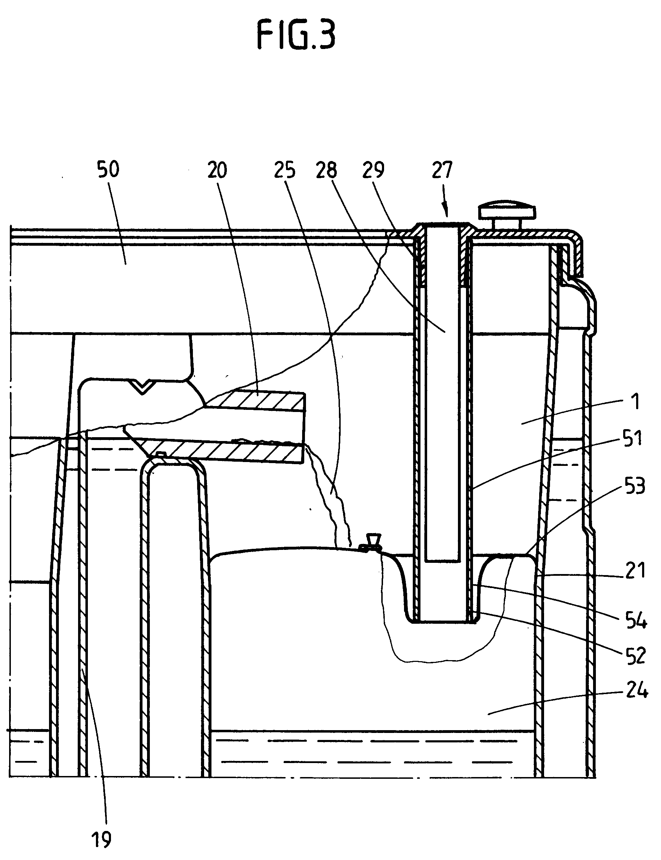

Aus Fig. 3 geht hervor, daß der Niveaumelder 27 nicht nur einen schwimmfähigen Stab 28 aufweist, der in der am Deckel 50 des Gehäuses 1 angebrachten Fassung 29 senkrecht verschiebbar geführt ist, sondern daß an der Unterseite des Deckels 50 den Stab 28 des den Niveaumelders 27 umgebend ein Distanzrohr 51 befestigt ist, das mit seinem unteren 52 in einen in der Kammer 21 angeordneten Sack 53, der das olephile Vorfilter und die Aktivkohle enthält, drückt und dort eine Vertiefung 54 bildet. Somit wird ein Aufschwimmen des Sackes 53 samt Inhalt verhindert, selbst wenn wegen Verstopfung des Aktivkohle-Adsorbers dieser unter Aufschwemmdruck steht. Die sich über dem verstopften Aktivkohle-Adsorber 24 ansammelnde bzw. rückstauende Flüssigkeit tritt durch das untere Ende 52 in das Distanzrohr 51 ein und bewirkt dann das Aufschwimmen des Stabes 28, so daß dieser nach oben aus der Fassung 29 herausgeschoben wird.

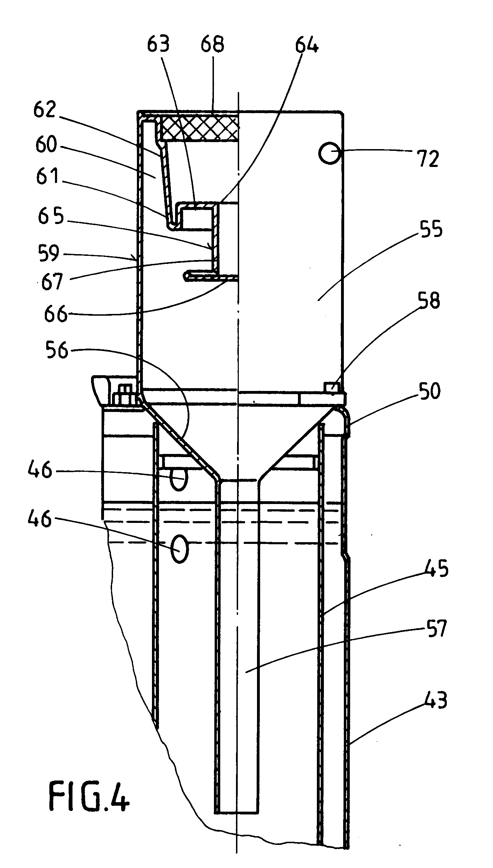

Bei der Ausführungsform gemäß Fig. 4 ist die einen Trichter bildende Druckentlastungskammer 55 mit ihrem trichterförmigen Abschnitt 56 und dem sich daran anschließenden Fallrohr 57 als eine separate Einheit ausgebildet, die auf den Deckel 50 des kastenartigen Gehäuses 43 aufgesetzt und mittels Schrauben 58 auf diesem befestigt ist.

Von oben ragt in den zylinderförmigen Abschnitt 59 der Druckentlastungskammer 55 eine Schikane 60 hinein, welche schalenförmig ausgebildet ist und am unteren Ende eine umlaufende Auffangrinne 61 für entlang der schräg verlaufenden bzw. konischen Seiten Seitenwand 62 herablaufendes Öl vorgesehen ist.

Im Boden 63 der Schikane 60 befindet sich eine zentrale Öffnung 64, an welche sich eine nach unten verlaufende zylindrische Verlängerung 65 anschließt, welche am unteren Ende eine geschlossene Bodenplatte 66 aufweist, die flanschartig radial über den Außenumfang der Verlängerung 65 übersteht.

Die Verlängerung 65 enthält seitliche Öffnungen 67, durch die unter Druck stehendes Gas wie Luft, das durch einen als Zulauf dienenden Stutzen 68 herangeführt worden ist.

Am oberen Ende der Druckentlastungskammer 55 ist auf die Schikane 60 eine Filterscheibe 68 aufgesetzt, die aus offenporigem Polyurethan-Schaum besteht, der mit Aktiv-Kohle getränkt ist. Diese Filterscheibe 68 kann in der aus der Druckentlastungskammer 55 befindliche Öl-Dampfanteile adsorbieren und absorbieren, soweit diese nicht an der Seitenwand 62 der Schikane 60 nach unten in die Auffangrinne 61 laufen.

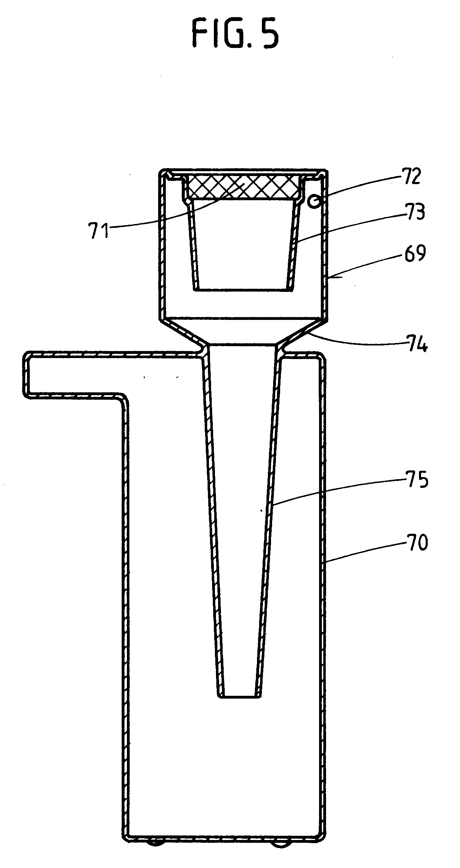

Während bei der Ausführungsform Fig. 4 die Druckentlastungskammer 55 als separates Bauteil ausgebildet ist, welches auf das Gehäuse 43 bzw. den Deckel 50 desselben aufgeschraubt ist, ist bei der Ausführungsform gemäß Fig. 5 die Druckentlastungskammer 69 als integrales Bauteil mit dem kastenartigen Gehäuse 70 ausgebildet und mit diesem einstückig im Rotationssinterverfahren aus Kunststoff wie Polyethylen geformt.

Die Druckentlastungskammer 69 enthält am oberen Ende eine Filterscheibe 71 aus mit Aktiv-Kohle getränktem Polyurethan-Schaum zum Zurückhalten von Öl-Dampfanteilen in der entweichenden Luft, die durch einen etwa tangential in die Druckentlastungskammer 69 mündenden Zulaufstutzen 72 stoßweise oder auch fortlaufend eingeleitet wird.

Die Filterscheibe 71 befindet sich im oberen Ende eines Trichtereinsatzes 73, der den Zulaufstutzen 72 gegenüber der Filterscheibe 71 abdeckt, so daß die durch den Zulaufstutzen 72 eintretende Luft bzw. das zulaufende Kondensat zunächst nach unten laufen und die Luft schließlich nach oben umgelenkt wird, während die in ihr enthaltenen flüssigen Bestandteile weitgehend nach unten weiterlaufen.

Die Druckentlastungskammer 69 ist am unteren Ende mit einem trichterförmigen Ansatz 74 versehen, der in ein konisches Fallrohr 75 mündet, welches tief in das Gehäuse 70 hineinragt.

## Patentansprüche

1. Vorrichtung zum Trennen von Öl und Wasser, beispielsweise zum Zerlegen von aus Druckluft- und Druckgassystemen abgeschiedenem Kondensat in Öl und Wasser, mit einem kastenartigen Gehäuse, das einzelne, labyrinthartig untereinander in Reihe verbundene Kammern zur Schmutzsedimentation, Schmutzadsorption und zum Aufschwimmen von Öl enthält.
**dadurch gekennzeichnet**,
daß das Gehäuse (1; 43) mit in und an ihm angeordneten Kammern (3; 21; 47) und Einbauten (19; 32, 33; 35) nahtlos einstückig aus Kunststoff besteht.

2. Vorrichtung nach Anspruch 1, dadurch gekennzeichnet, daß das Gehäuse (1; 43) und in bzw. an ihm angeordnete Kammern (3; 21; 47) und Einbauten (19; 32, 33; 35) aus Polyethylen nach dem Rotationssinterverfahren geformt sind.

3. Vorrichtung nach Anspruch 1 oder 2, dadurch gekennzeichnet, daß im Gehäuse (1; 43) vorgesehene rotationssymetrische Kammern (21; 47) für die Aufnahme von Aktivkohle-Adsorbern (24) wenigstens auf einem Teil (23) ihrer Länge sich nach oben konisch erweiternd ausgebildet sind.

4. Vorrichtung nach Anspruch 3, dadurch gekennzeichnet, daß wenigstens einer der konischen Kammern (21; 47) ein in diese von oben hineinragender Niederhalter (27) zugeordnet ist.

5. Vorrichtung nach Anspruch 4, dadurch gekennzeichnet, daß der Niederhalter (27) als Niveaumelder ausgestaltet ist.

6. Vorrichtung nach Anspruch 4 oder 5,. dadurch gekennzeichnet, daß der Niederhalter (27) in feststehendes, in das Gehäuse (1; 43) hineinragendes, nach unten offenes Distanzrohr (51) und in diesem einen senkrecht verschiebbar geführten schwimmfähigen Stab (28) aufweist.

7. Vorrichtung nach einem der Ansprüche 1 bis 6, dadurch gekennzeichnet, daß sie als ständig offenen Ölauslaß ein senkrecht verlaufendes Fallrohr (40) aufweist, das in ein auswechselbares Sammel-Behältnis (42) mündet.

8. Vorrichtung nach Anspruch 7, dadurch gekennzeichnet, daß das den Ölauslaß (39) bildende Fallrohr (40) senkrecht verstellbar im Gehäuse (1; 43) angeordnet ist.

9. Vorrichtung nach einem der Ansprüche 1 bis 8, dadurch gekennzeichnet, daß sie einen Aktivkohle-Adsorber (24) enthält, an dessen Einlaufende vor der Aktivkohle ein olephiles Vorfilter (30) zum Adsorbieren und Absorbieren von Ölresten angeordnet ist.

10. Vorrichtung nach Anspruch 9, dadurch gekennzeichnet, daß das Vorfilter (30) aus einer Faserschicht Polypropylen-Fasern besteht.
